Europäisches Patentamt

European Patent Office

Office européen des brevets

(11) Veröffentlichungsnummer: **0 359 001**

**A2**

## (12) EUROPÄISCHE PATENTANMELDUNG

(21) Anmeldenummer: 89115662.2

(22) Anmeldetag: 25.08.89

(51) Int. Cl.⁵: **B29C 43/50**

(30) Priorität: 15.09.88 DE 3831361

(43) Veröffentlichungstag der Anmeldung:
21.03.90 Patentblatt 90/12

(84) Benannte Vertragsstaaten:
**DE ES FR IT SE**

(71) Anmelder: **Fried. Krupp Gesellschaft mit beschränkter Haftung**
**Altendorfer Strasse 103**
**D-4300 Essen 1(DE)**

(72) Erfinder: **Brüssel, Richard**
**Hauptstrasse 106**
**D-7519 Sulzfeld(DE)**

(54) Vorrichtung zum Ausbringen eines Formteils von hydraulischen Pressen.

(57) Bei einer Vorrichtung zum Ausbringen des gepreßten Formteils (18) von hydraulischen Pressen, insbesondere Pressen für die Verarbeitung von faserverstärkten Kunststoffen, die zur Presse hin und zurück verfahrbar und mit mindestens einem Arm versehen ist, welcher das Formteil (18) aus dem Preßwerkzeug herausnimmt und entfernt, wird ein sicheres und schonendes Ausbringen dadurch erzielt, daß die Vorrichtung zwei in ihrem Abstand zueinander verstellbare, an ihren freien Enden mit einem Greifer (17) versehene Arme (16) aufweist, und die Greifer (17) so angeordnet und geformt sind, daß sie das Formteil (18) an zwei gegenüberliegenden, etwa quer zur Verfahrrichtung der Vorrichtung sich befindenden Enden so umgreifen, daß am Ende einer eingestellten abstandsverstellenden Schließbewegung (Schließhub) der Arme (16) das Formteil (18) lagebestimmt gehalten und dabei keine Kraft in Schließbewegungsrichtung auf das Formteil (18) ausgeübt wird.

FIG. 1

EP 0 359 001 A2

## Vorrichtung zum Ausbringen eines Formteils von hydraulischen Pressen

Die Erfindung bezieht sich auf eine Vorrichtung zum Ausbringen des gepreßten Formteils von hydraulischen Pressen, insbesondere Pressen für die Verarbeitung von faserverstärkten Kunststoffen, nach dem Oberbegriff des Anspruchs 1.

Für die Verarbeitung von faserverstärkten Kunststoffen zu Formteilen in hydraulischen Pressen härtet das gepreßte Formteil unter Druck im beheizten Preßwerkzeug aus. Danach muß es in der Regel in dem als Patrize ausgebildeten Unterteil des Preßwerkzeugs entweder von Hand oder durch eine Entnahmevorrichtung ausgebracht werden, um für das nachfolgende Einlegen des sogenannten Harzmattenpakets für ein neues Formteil Platz zu schaffen. Aus Gründen der Arbeitssicherheit sind hierfür Vorrichtungen erforderlich, wobei bekannte Vorrichtungen dieser Art entweder mit mechanischen Greifern oder Vakuumsaugern ausgerüstet worden sind. Die bekannten mechanischen Greifer sind dabei mit Haken ausgerüstet, die das Formteil an mehreren Stellen von oben her umgreifen, aus dem Werkzeug herausheben und danach aus der Presse entfernen. Diese Vorrichtung ist kompliziert aufgebaut und ist in den meisten Fällen nicht anwendbar, weil das Formteil beim Herausnehmen beschädigt wird.

Bei den bisher eingesetzten Vakuumsaugern, deren Saugnäpfe in der Regel von oben her auf das fertige Formteil aufgesetzt werden, sind mechanische Beschädigungen zwar weitgehend ausgeschlossen, jedoch hinterlassen diese Vorrichtungen bei den vielfach hergestellten beschichteten Formteilen, den sog. IMC-Formteilen, deren Oberflächen nach dem Preßvorgang noch nicht vollkommen ausgehärtet sind, ebenfalls Beschädigungen oder zumindest unerwünschte Markierungen. Darüber hinaus erfordern die bekannten Entnahmevorrichtungen einen größeren Pressenhub und eine unter Umständen damit verbundene größere Bauhöhe der Presse, weil die Greifer bzw. Saugnäpfe eine ausreichend große räumliche Höhe über dem Werkzeug benötigen. Damit verbunden sind entsprechend längere Zykluszeiten zwischen den Arbeitshüben, infolge der größeren Wege des Pressenstößels und der Greifer.

Der Erfindung liegt die Aufgabe zugrunde, eine Vorrichtung der eingangs genannten Art zu schaffen, die bei einfachem Aufbau ein schonendes und trotzdem sicheres Entfernen der Formteile aus der Presse ermöglicht. Die Aufgabe wird gelöst mit den Merkmalen des kennzeichnenden Teils des Anspruchs 1.

Die neue Vorrichtung weist eine Reihe von Vorteilen auf. Da die Greifer das Formteil nur formschlüssig umgreifen, ist nicht nur eine schonende Behandlung des Formteils gewährleistet, sondern auch eine hohe Beschleunigung bei den Entnahmebewegungen möglich, wodurch die Zykluszeit zwischen den einzelnen Arbeitshüben der Presse verkürzt wird. Eine weitere Verkürzung der Zykluszeit ergibt sich dadurch, daß die Greifer seitlich am Formteil angreifen und der Pressenhub damit nicht nur so klein wie möglich gehalten werden kann, sondern auch Absenkbewegungen des Greifers entfallen. Ferner können die Greifer bereits während des Öffnungshubes in die Presse einfahren, wodurch die Zykluszeit noch weiter verkürzt wird. Gegenüber den Vakuumsaugern entfällt nicht nur eine Beschädigung der Oberfläche der Formteile, sondern auch der für die Vakuumsauger erforderliche zusätzliche Installations- und Energieaufwand.

Vorteilhafte Ausgestaltungen der Erfindung sind Gegenstand der Ansprüche 2 bis 13.

In der Zeichnung ist ein Ausführungsbeispiel der Erfindung schematisch dargestellt und nachfolgend näher erläutert. Es zeigt

Fig. 1 eine Hälfte der neuen Vorrichtung in Draufsicht und

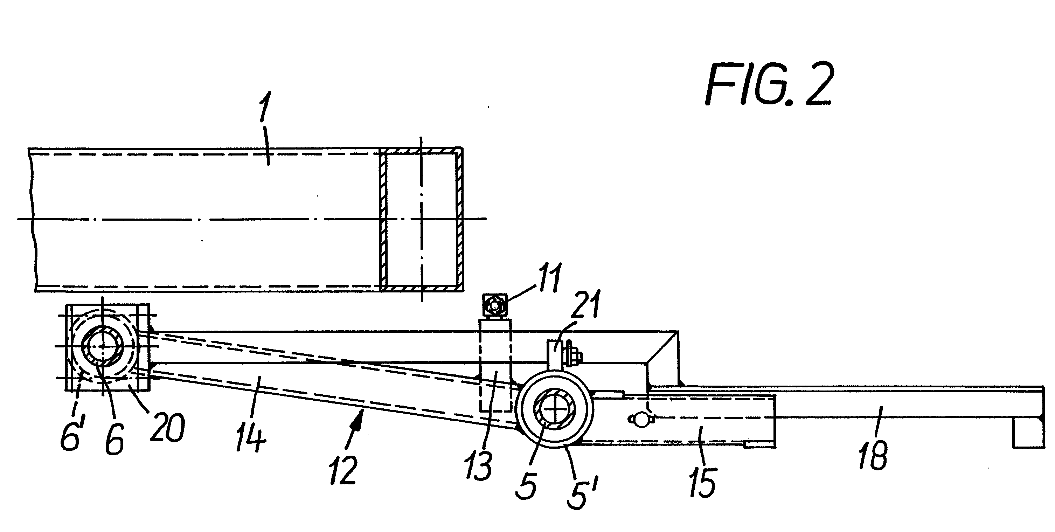

Fig. 2 einen Schnitt nach der Linie II-II in Fig. 1.

Die Vorrichtung weist zwei Haltearme 1 auf, die sich in horizontaler Richtung zueinander winklig und symmetrisch zu einer senkrechten Ebene 2 erstrecken. Über einen Flansch 3, der ebenfalls symmetrisch zur Ebene 2 angeordnet ist, sind die Haltearme 1 mit einer nicht dargestellten Verstelleinrichtung verbunden, die horizontale Bewegungen in Richtung der Ebene 2 sowie gleichzeitig senkrechte Bewegungen auszuführen vermag.

An den Haltearmen 1 ist ein sich unter diesen horizontal erstreckendes rechteckiges rahmenartiges Gestell 4 angeordnet, das ebenfalls symmetrisch und rechtwinklig zur Ebene 2 verläuft und zwei rohrförmige, parallel zueinander und waagerecht verlaufende Schienen 5 und 6 aufweist. Im Bereich der Ebene 2 sind die Schienen 5 und 6 über eine Brücke 7 miteinander verbunden, auf der ein Pneumatikzylinder 8 angeordnet ist, der ein zweiarmiges Winkelhebelgestänge antreibt, wobei jeder Winkelhebel 10 um eine senkrechte Achse 9 schwenkbar ist. Die horizontal und in der Ebene 2 verlaufenden Hubbewegungen des Pneumatikzylinders 8 werden - durch die Winkelhebel 10 umgelenkt - über im Bereich und parallel zu der Schiene 5 verlaufende Stellstangen 11 jeweils von einem Schlitten 12 übertragen, an dem sie über einen Arm 13 in ihrer wirksamen Länge verstellbar befestigt sind. Jeder Schlitten 12 weist über eine Brücke 14 verbundene Gleithülsen 5' und 6' auf, die auf den Schienen 5 und 6 bewegbar sind.

An den Gleithülsen 5' ist jeweils eine Steckschiene 15 so angeordnet, daß sie horizontal und parallel zur Ebene 2 verläuft und der nicht dargestellten hydraulischen Presse zugewandt ist, während der Flansch 3 auf der gegenüberliegenden, also der der Presse abgewandten Seite der Vorrichtung angeordnet ist. Die Steckschienen 15 dienen dem Befestigen der erfindungsgemäßen Arme 16, die dafür in Verfahrrichtung der Vorrichtung aufgeschoben werden und an ihren freien Enden jeweils mit einem Greifer 17 zum Umgreifen des durch Strichlinien angedeuteten Formteils 18 versehen sind. Die Vorrichtung weist ferner zwei Abstreifarme 19 auf, die etwa parallel zu den Armen 16 verlaufen und wobei jeder Abstreifarm 19 einem der beiden Schlitten 12 zugeordnet ist. Die ebenfalls symmetrisch zur Ebene 2 angeordneten Abstreifarme 19 sind jeweils einerseits über Stellringe 20 an der Schiene 6 feststellbar und liegen andererseits auf der Gleithülse 5' zur Reibungsverminderung mit ihren Rollen 21 auf der Gleithülse 5' jeweils lose auf. Durch diese Anordnung machen die Abstreifarme 19 die durch den Pneumatikzylinder 8 verursachten Öffnungs- und Schließbewegungen der Arme 16 nicht mit.

Das Ausbringen des gepreßten Formteils aus der hydraulischen Presse mit der beschriebenen Vorrichtung läuft wie folgt ab:

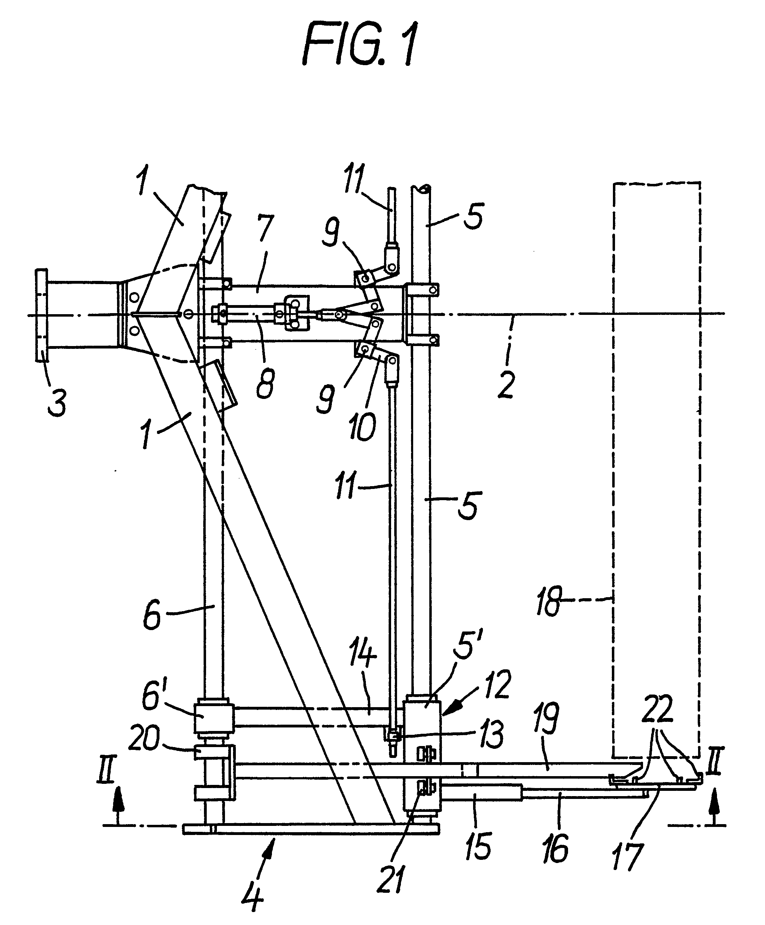

Die Vorrichtung fährt während des Öffnungshubes zur hydraulischen Presse hin vor, bis sie nach dem Öffnungshub die Endstellung erreicht hat, wobei, wie in Fig. 1 gezeigt, die Greifer 17 den beiden Enden des langgestreckten Formteils stirnseitig gegenüberliegen. Danach führt der Pneumatikzylinder 8 seine Schließbewegung aus, wodurch die am Greifer 17 angeordneten, dem Formteil 18 angepaßten Vorsprünge 22 dieses so umgreifen, daß das Formteil lagebestimmt gehalten wird, aber - durch entsprechende Hubeinstellung -keine Kraft auf das Formteil ausgeübt wird. Das Formteil 18 wird danach durch die nicht dargestellte Verstelleinrichtung so weit mittels der Arme 16 in senkrechter Richtung aus dem Unterteil des Preßwerkzeugs herausgehoben, bis es durch die horizontale Verfahrbewegung der Vorrichtung ungehindert aus der Presse entfernt werden kann. Nachdem die Vorrichtung die Stellung erreicht hat, in welcher das Formteil 18 zum Weitertransport abgelegt werden soll, wird sie bis in die Ablegeposition abgesenkt und durch den Pneumatikzylinder 8 die Öffnungsbewegung der Arme 16 ausgeführt. Dabei führtin dem Fall, daß das Formteil sich von dem ihm zugeordneten Greifer 17 nicht löst, einer der beiden Abstreifarme 19 eine Abstreiferfunktion dadurch aus, daß sein freies Ende, das oberhalb der Vorsprünge 21 angeordnet ist, am Formteil 18 angreift, wodurch dieses von den Vorsprüngen 22 abgestreift und gleichzeitig abgelegt wird. Danach wird die Vorrichtung wieder angehoben und in Richtung der hydraulischen Presse zur Durchführung des folgenden, in gleicher Weise verlaufenden Entnahmevorgangs verfahren.

Durch Verstellen der Länge der Stellstangen und einem angepaßten gleichzeitigen Verstellen der Abstreifarme 19 über die Stellringe 20 kann praktisch jeder beliebige Schließhub eingestellt werden. Durch Auswechseln der Greifer 17 und ggf. auch der Abstreifarme 19 können dabei auch sehr verschieden ausgebildete Formteile mit der Vorrichtung ausgebracht werden. Wenn die Formteile zumindest eine entsprechend geformte Tasche aufweisen, so ist unter Umständen der Einsatz nur eines Abstreifarms ausreichend. Die Vorrichtung kann zur Anpassung an extrem anders ausgebildete Formteile in ihrer Formgebung gegenüber dem Ausführungsbeispiel im Rahmen der Erfindung erheblich abgewandelt werden.

Für den Fall, daß das Formteil aus dem Oberteil des Preßwerkzeugs entnommen werden soll, ist dieses, damit ein Herausfallen verhindert wird, zweckmäßig mit einer Einrastverriegelung für das Formteil versehen. Diese kann dann vorteilhaft so ausgebildet werden, daß sie bei der Ausführung der Schließbewegung durch den oder die Greifer bzw. ihrer Vorsprünge lösbar ist.

Eine weitere Möglichkeit, die Funktionen der Vorrichtung nach der Erfindung auszubauen, besteht darin, daß sie mit Düsen versehen wird, die eines oder beide Preßwerkzeugteile nach der Entnahme des Formteils zum Reinigen beaufschlagen, wofür bevorzugt Preßluft eingesetzt wird. Die Düsen können dabei - je nach Ausbildung des Preßwerkzeugs - auch an den Armen 17 oder den Absstreifarmen 19 angeordnet sein. Hierdurch kann weitere Zykluszeit und/oder eine besondere Reini-gungsvorrichtung eingespart werden.

## Ansprüche

1. Vorrichtung zum Ausbringen des gepreßten Formteils von hydraulischen Pressen, insbesondere Pressen für die Verarbeitung von faserverstärkten Kunststoffen, die zur Presse hin und zurück verfahrbar und mit mindestens einem Arm versehen ist, welcher das Formteil aus dem Preßwerkzeug herausnimmt und entfernt,
**dadurch gekennzeichnet,**
daß die Vorrichtung zwei in ihrem Abstand zueinander verstellbare, an ihren freien Enden mit einem Greifer (17) versehene Arme (16) aufweist, und die Greifer (17) so angeordnet und geformt sind, daß sie das Formteil (18) an zwei gegenüberliegenden, etwa quer zur Verfahrrichtung der Vorrichtung sich befindenden Enden so umgreifen, daß am Ende einer eingestellten abstandverstellenden Schließbewegung (Schießhub) der Arme (16) das Formteil (18) lagebestimmt gehalten und dabei keine Kraft in Schließbewegungsrichtung auf das Formteil (18) ausgeübt wird.

2. Vorrichtung nach Anspruch 1, dadurch gekennzeichnet, daß sie mindestens einen das Formteil (18) gegen eine Verschiebung quer zur Verfahrrichtung der Vorrichtung sichernde und sein Austragen nach unten ermöglichenden Abstreifarm aufweist.

3. Vorrichtung nach Anspruch 2, dadurch gekennzeichnet, daß zwei Abstreifarme (19) vorgesehen sind, die das Formteil (18) berührungsfrei umgreifen.

4. Vorrichtung nach Anspruch 3, dadurch gekennzeichnet, daß der Abstand der Abstreifarme (19) voneinander einstellbar ist.

5. Vorrichtung nach einem der vorhergehenden Ansprüche, dadurch gekennzeichnet, daß die den Schließhub ausführenden Elemente unabhängig von der Schließbewegung in ihrem Abstand zueinander verstellbar sind.

6. Vorrichtung nach einem der vorhergehenden Ansprüche, dadurch gekennzeichnet, daß die den Schließhub ausführenden Elemente durch Schlitten (12) gebildet sind, die auf mindestens einer quer zur Verfahrrichtung an der Vorrichtung angeordneten Schiene verfahrbar sind.

7. Vorrichtung nach Anspruch 6, dadurch gekennzeichnet, daß die Schlitten (12) über ein Gestänge mit einem den Schließhub ausführenden Pneumatikzylinder (8) verbunden sind.

8. Vorrichtung nach Anspruch 7, dadurch gekennzeichnet, daß der Pneumatikzylinder (8) über zwei Winkelhebel (10) und einer jedem Winkelhebel zugeordneten Stellstange (11) an die Schlitten (12) angreift.

9. Vorrichtung nach Anspruch 8, dadurch gekennzeichnet, daß die Angriffspunkte (13) der Stellstangen (11) längenverstellbar sind.

10. Vorrichtung nach einem der Ansprüche 6 bis 9, dadurch gekennzeichnet, daß jeder Arm (16) mit zwei gekoppelten Schlittenelementen (Gleithülsen 5', 6') verbunden ist, die an zwei etwa höhengleich parallel zueinander verlaufenden Schienen (5, 6) geführt sind.

11. Vorrichtung nach einem der vorhergehenden Ansprüche, dadurch gekennzeichnet, daß die Greifer (17) gegen andere Greifer auswechselbar an den Armen (15) befestigt sind.

12. Vorrichtung nach einem der vorhergehenden Ansprüche, wobei das Formteil aus dem Oberteil des Preßwerkzeugs entnommen wird, dadurch gekennzeichnet, daß das Oberteil mit einer Einrastverriegelung für das Formteil (18) versehen ist, die mittels mindestens einem der Greifer (17) lösbar ist.

13. Vorrichtung nach einem der vorhergehenden Ansprüche, dadurch gekennzeichnet, daß sie mit mindestens eines der Preßwerkzeugteile zum Reinigen beaufschlagenden Düsen versehen ist.

# FIG. 1

EP 0 359 001 A2

*FIG.2*